# EUROPEAN PATENT APPLICATION

(11) **EP 3 572 216 A1**
(43) Date of publication of application: **27.11.2019**
(21) Application number: 19176047.9
(22) Date of filing: 22.05.2019
(51) Int. Cl.: B29C 70/38, B29C 64/209, B29C 64/393, B33Y 30/00, B33Y 50/02, B29C 70/20, G01L 5/00

(54) **MEASUREMENT DEVICE AND METHOD FOR MEASURING THE TENSION OF CARBON FIBER TOWS**

(30) Priority: 24.05.2018 US 201862675928 P
(71) Applicant: Bombardier Inc., Dorval, Québec H4S 1Y9 (CA)
(72) Inventor: HAJZARGARBASHI, Seyedhossein, Laval, Québec H7L 5T6 (CA); CUCHILLA-MARINO, David, Montreal, Québec H3W 1E7 (CA)
(74) Representative: Holmes, Matthew William

(57) **Abstract**

A measurement device for simultaneously measuring the tension in a plurality of fiber tows mounted within a deposition head of a fiber placement robot. The measurement device includes a plurality of load cells and a plurality of connectors. The connectors are connected to the load cells. The connectors are adapted to be connected to a respective one of the plurality of fiber tows. Movement of the fiber placement robot in relation to the measurement device generates a plurality of measured tension readings, each being associated with a respective tension in each of the plurality of fiber tows. The measurement device also includes at least one controller. The controller receives the plurality of measured tension readings, compares each of the plurality of measured tension readings to a predetermined tension, and outputs a deviation signal indicative of whether one or more of the plurality of tension readings deviates from the predetermined tension.

## Description

### Cross-Reference to Related Application(s)

This application claims priority from US Provisional Patent Application No. 62/675,928, filed 24th May 2018, the entire contents of which are expressly incorporated herein by reference.

### Field of the Invention

The present disclosure concerns a measurement device, such as a tensiometer, and a method for measuring the tension in carbon fiber tows.

### Description of the Related Art

The fabrication of a composite component from carbon fiber tows involves the placement of many carbon fiber tows adjacent to one another. A carbon fiber tow is a tape containing carbon fiber filaments disposed in an uncured resin matrix.

To create the desired thickness for the composite component, the carbon fiber tows are layered atop one another until the composite component achieves the desired thickness.

For specific composite components, the laying of the carbon fiber tows is not continuous. Specifically, to create one or more openings in a component (e.g., an opening for a window), the carbon fiber tows, which are typically deposited in parallel lines, are not deposited in the space where the window will be positioned. As a result, the lengths of the carbon fiber tows are adjusted so that individual ones of the carbon fiber tows terminate at opposite sides of the opening.

Typically, the laying of carbon fiber tows onto a mold is performed by a robot often referred to as an Advanced Fiber Placement ("AFP") machine. In most cases, plural carbon fiber tows are laid by the robot simultaneously.

As should be apparent to those skilled in the art, the tension established in each of the tows may impact the laying of each tow onto the mold or onto previously-deposited layers of carbon fiber tows. This tension may cause a "late-start" or a missing tow in the placement of the tows, causing them to be out-of-tolerance, which can impact the quality of the final composite component.

In addition, for certain components, if tow tension is high, a driving motor of the robot might have difficulty overcoming that tension in order to feed the tow on the mold. In these cases, after visual inspection, an operator will be required to manually place the tow on the mold.

Accordingly, a need has developed to rapidly and accurately measure the tension in the plurality of carbon fiber tows that are to be deposited onto a surface of a mold when fabricating a carbon fiber component using a robot.

The prior art fails to provide solutions for taking this measurement and it is therefore an aim of embodiments of the present disclosure to address one or more of the deficiencies associated with the prior art.

### Summary

Aspects of the disclosure provide a measurement device and a method as claimed in the appended claims. In an embodiment, a measurement device for simultaneously measuring the tension in a plurality of fiber tows mounted within a deposition head of a fiber placement robot includes a plurality of load cells and a plurality of connectors. Each of the plurality of connectors is connected to a respective one of the plurality of load cells. Each of the plurality of connectors is adapted to be connected to a respective one of the plurality of fiber tows. Movement of the fiber placement robot in relation to the measurement device may generate a plurality of measured tension readings, each of the plurality of measured tension readings being associated with a respective tension in each of the plurality of fiber tows. The measurement device may also include at least one controller. The controller may receive the plurality of measured tension readings from the plurality of load cells, compare each of the plurality of measured tension readings to a predetermined tension, and output a deviation signal indicative of whether one or more of the plurality of tension readings deviates from the predetermined tension.

In one embodiment, the at least one controller includes a plurality of microcontrollers. Each of the plurality of microcontrollers may be associated with each of the plurality of load cells.

In an embodiment, the measurement device includes a display for displaying an output of the deviation signal if one or more of the plurality of tension readings deviates from the predetermined tension.

In an embodiment, the display may display an indication of a deviance of a measured tension reading from the predetermined tension.

The deviation signal may encompass a plurality of deviation signals, each being associated with one of the plurality of tension readings.

Still further, it is contemplated that the indication of a deviance of a measured tension reading may be a visual indication of an out-of-tolerance condition.

In an embodiment, the measurement device may include a machine-readable memory unit for storing the plurality of measured tension readings.

The machine-readable memory unit also may store the predetermined tension.

In an embodiment, the machine-readable memory unit may store the deviation signal.

In an embodiment, the plurality of load cells may simultaneously generate the plurality of measured tension readings.

In an embodiment, the plurality of load cells comprises sixteen load cells.

The measurement device may include a housing, sixteen connectors, each being connected to one of the sixteen load cells, and sixteen load bars disposed in the housing between the sixteen connectors and the sixteen load cells. The sixteen load bars may be arranged to flex under tension and cooperate with the sixteen load cells to generate the plurality of measured tension readings.

In an embodiment, sixteen load bars are arranged in the housing in a first row of eight load bars and a second row of eight load bars.

In another embodiment, a method is provided for determining a measured tension in each of a plurality of fiber tows at a head of a robot adapted to deposit the plurality of fiber tows onto a mold, the measured tension being determined by a measurement device comprising a plurality of load cells and a plurality of connectors each connected respectively to one of the plurality of load cells. The method may include, upon attachment of each of the plurality of fiber tows to a respective one of the plurality of load cells, obtaining a plurality of measured tension readings, each of the plurality of measured tension readings being associated with a respective tension in each of the plurality of fiber tows. The method may include comparing each of the plurality of measured tension readings to a predetermined tension value and generating at least one deviation signal indicative of whether one or more of the plurality of measured tension readings deviates from a predetermined tension value based on the comparing. The method may include causing adjustment to at least one parameter associated with the operation of the fiber placement robot in response to the generating of the at least one deviation signal.

In an embodiment, at least one controller may be connected to the measurement device. Here, the controller may compare the measured tension readings with the predetermined tension value in each of the plurality of fiber tows.

Where a controller is provided, the controller may determine a deviation between the measured tension readings and the predetermined tension value for each of the plurality of fiber tows.

The controller may be arranged to adjust the at least one operational parameter.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

Embodiments of the present disclosure will now be described, by way of example only, with reference to the accompanying drawings, in which:
Fig. 1 is a perspective illustration showing one example apparatus with which the measurement device of the present disclosure may be employed in connection with the fabrication of a carbon fiber composite component;
Fig. 2 is a graphical, side view representation of the apparatus illustrated in Fig. 1;
Fig. 3 is a graphical, top view illustrating the deposition of a plurality of carbon fiber tows on a surface of a mold;
Fig. 4 is a graphical, top view illustrating a deposition of a plurality of carbon fiber tows on a surface of a mold, where the tows are separated by a gap;
Fig. 5 is a graphical, side view of the apparatus illustrated in Figs. 1 and 2, showing the positioning of the measurement device of the present disclosure in relation to the head of the fiber placement robot that deposits the carbon fiber tows onto the surface of the mold;
Fig. 6 is a graphical, side view of the apparatus illustrated in Fig. 6, showing the fiber placement robot after being moved to a predetermined position where the tension in the carbon fiber tows is determined;
Fig. 7 is a perspective illustration of a measurement device of embodiments of the present disclosure; and
Fig. 8 is a flow chart outlining one example method for measuring the tension in the plurality of carbon fiber tows simultaneously.

### Description of Embodiments

The following discussion of the embodiments is intended to highlight the breadth and scope of the present invention without limiting the invention thereto. Those skilled in the art should appreciate that the present invention may be implemented via one or more equivalents and variations of the embodiments described herein. Those equivalents and variations are intended to be encompassed by the present invention.

In the paragraphs that follow, embodiments of the present invention are described in connection with the manufacture of a component from a plurality of carbon fiber tows that are layered atop one another until the component acquires a suitable thickness. More specifically, the embodiments are described in connection with the layering of carbon fiber tows by an automated device, such as a fiber placement robot.

It is noted, however, that the present invention should not be understood to be limited to the manufacture of composite components from carbon fibers tows. To the contrary, the present invention encompasses the manufacture of composite components from tows incorporating any number of materials, as should be apparent to those skilled in the art. For example, some tows include one or more of aramid fibers, nylon fibers, polyester fibers, glass fibers, metal fibers, and the like. These fibers may or may not be combined with carbon fibers to create the individual tow.

It is also noted that the present invention should not be understood to be limited solely to the application of carbon fiber tows from a fiber placement robot. To the contrary, an automated application device other than a fiber placement robot may be employed.

Still further, embodiments of the present invention are discussed in connection with the fabrication of composite components that may be incorporated into an aircraft. However, the present invention is contemplated to encompass composite components manufactured for any suitable purpose and should not be understood to be limited solely to the fabrication of aircraft components. For example, the present invention may be employed in the fabrication of composite components for automobiles, trains, boats, wind-vanes, etc.

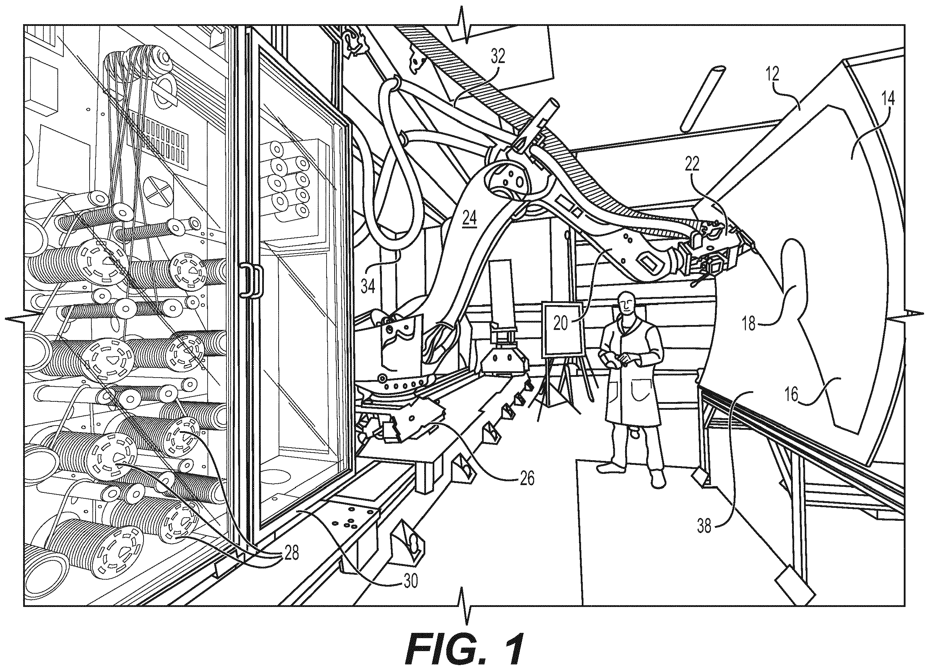

Fig. 1 is a perspective illustration of an apparatus with which a measurement device 10 of embodiments of the present disclosure is contemplated to operate. To provide a framework for understanding aspects of the measurement device 10, a discussion of the apparatus is first provided. In some, but not necessarily all, embodiments, the present invention may encompass both the measurement device 10 and aspects of the apparatus as discussed herein.

Fig. 1 illustrates a mold 12 onto which carbon fiber tows 14 are deposited to create a composite component 16. For illustrative purposes, the component 16 is partially complete. As shown in Fig. 1, the component 16 includes an opening 18 at a center thereof. The carbon fiber tows 14 are deposited in a manner that defines the opening 18 as layer upon layer of carbon fiber tows 14 are laid onto the surface 38 of the mold 12.

It is contemplated that the carbon fiber tows 14 are formed as prepreg tapes. A "prepreg" is a material where resin is pre-impregnated into the carbon fibers, but the resin is not yet cured. A prepreg, therefore, may have an associated tackiness that helps the prepreg to stick to the surface 38 of the mold 12 or to previously-deposited layers of carbon fiber tows 14.

The carbon fiber tows 14 are understood to define a width and a minimal thickness. Since the carbon fiber tows 14 are contemplated to include individual carbon fibers suspended in a resin that has not yet been cured, after all of the layers of the carbon fiber tows 14 are deposited on the mold 12 to form the composite component 16, the composite component 16 is cured 16 to form the final product. Typically, one or both of heat and pressure are applied to the carbon fiber tows 14 to cure the resin and create the final composite component 16.

The carbon fiber tows 14 may have a predetermined width. In accordance with a non-limiting example, the width of individual ones of the carbon fiber tows 14 is about ¼ of an inch (about 6 mm). However, the present invention should not be understood to be limited solely to this particular width. Carbon fiber tows 14 of any suitable width may be employed.

A fiber placement robot 20 (commonly referred to as an Advanced Fiber Placement "AFP" machine) deposits the carbon fiber tows 14 onto the mold 12 in parallel lines from a head 22 that contacts the surface 38 of the mold 12. The head 22 is connected to an articulated arm 24 secured on a base 26.

For the arrangement illustrated in Fig. 1, it is contemplated that sixteen carbon fiber tows 14 are deposited simultaneously onto the surface 38 of the mold 12 in parallel. While the head 22 deposits sixteen carbon fiber tows 14 in each pass of the head 22 over the surface 38 of the mold 12, the present invention should not be understood to be limited to this construction. To the contrary, any number of carbon fiber tows 14 may be deposited by the head 22.

Moreover, the number of carbon fiber tows 14 that are deposited in each pass may differ from any other pass of the head 22 across the mold 12.

The carbon fiber tows 14 are unraveled from spools 28 that are enclosed within a spool housing 30. The spool housing 30 provides a suitably stable environment to prevent the carbon fiber tows 14 from curing or partially curing prematurely. Moreover, the spool housing 30 helps to keep the carbon fiber tows 14 free from dust and contaminants before they are deposited onto the surface 38 of the mold 12.

After leaving the spools 28, the carbon fiber tows 14 snake through one or more conduits 32 that extend from the spool housing 30 to the head 22 of the fiber placement robot 20. The conduits 32 not only direct the carbon fiber tows 14 to the head 22, the conduits 32 also help to keep the carbon fiber tows 14 free from dust and other contaminants. While two conduits 32 are shown, the apparatus may have any number of conduits 32, as required or desired.

Alternatively, it is contemplated that the fiber placement robot 20 may operate without reliance on a spool housing 30. Still further, the fiber placement robot 20 may be configured to operate without any conduits 32. For example, the spools 28 may be mounted directly onto the head 22. As should be apparent to those skilled in the art, the particular arrangement of components is not critical to operation of the present invention. The embodiments described herein are merely indicative of non-limiting examples.

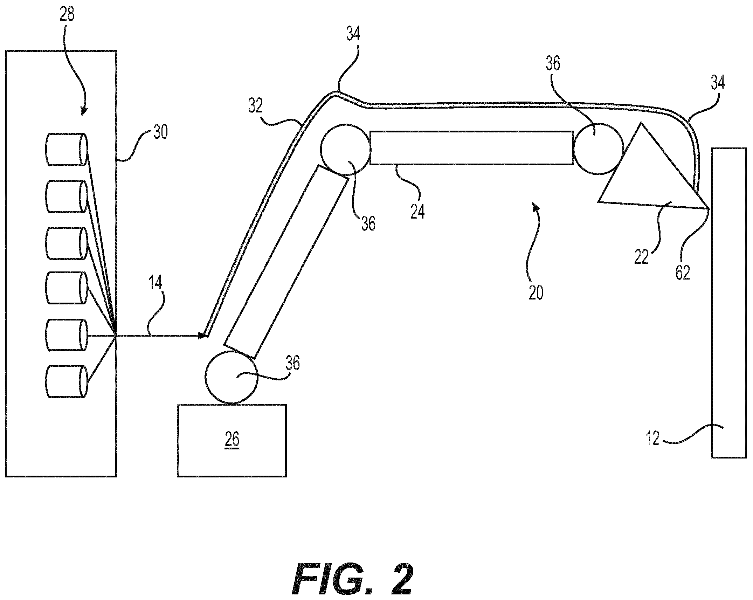

Fig. 2 is a graphical illustration of the apparatus illustrated in Fig. 1. For simplicity, only one conduit 32 is depicted. As shown, the conduit 32 includes a number of bends 34. The bends 34 provide a smooth transition around the joints 36 in the articulated arm 24, for example. The bends 34 are established dynamically by the shape and disposition of the articulated arm 24 as it moves to deposit the carbon fiber tows 14 onto the surface 38 of the mold 12. As the carbon fiber tows 14 travel through the conduits 32, tension can build up within the carbon fiber tows 14. This may be due to the relatively long distance between the spool 28 and the head 22, as well as the various feeding mechanisms within the conduit 32 that enable the carbon fiber tows 14 to travel smoothly through the bends 34.

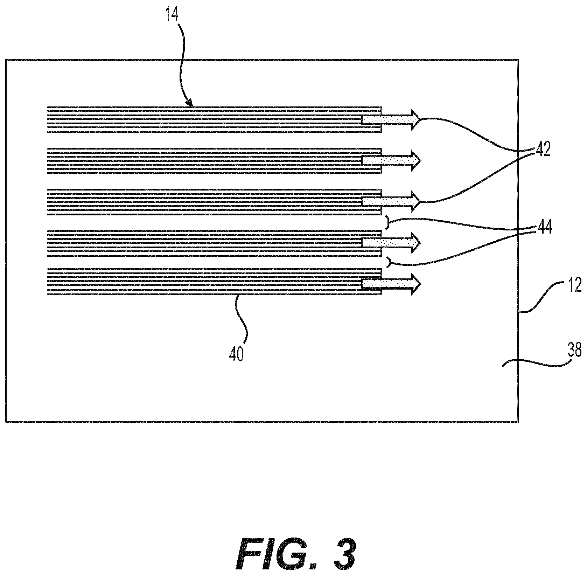

Fig. 3 is an enlarged, graphical representation of a portion of the surface 38 of the mold 12 onto which the carbon fiber tows 14 are deposited. In this illustration, for simplicity, only five carbon fiber tows 14 are shown. Each of carbon fiber tows 14 include individual carbon fibers 40 that are grouped together, within an uncured resin, to form the carbon fiber tow 14.

In Fig. 3, the carbon fiber tows 14 are deposited by the head 22 onto the surface 38 of the mold in the direction of the arrows 42. So that the individual carbon fiber tows 14 are distinguishable from one another in the illustrations, they are separated from one another by gaps 44. It should be understood, however, that the carbon fiber tows 14 are likely be laid next to one another with little or no gaps 44 between them.

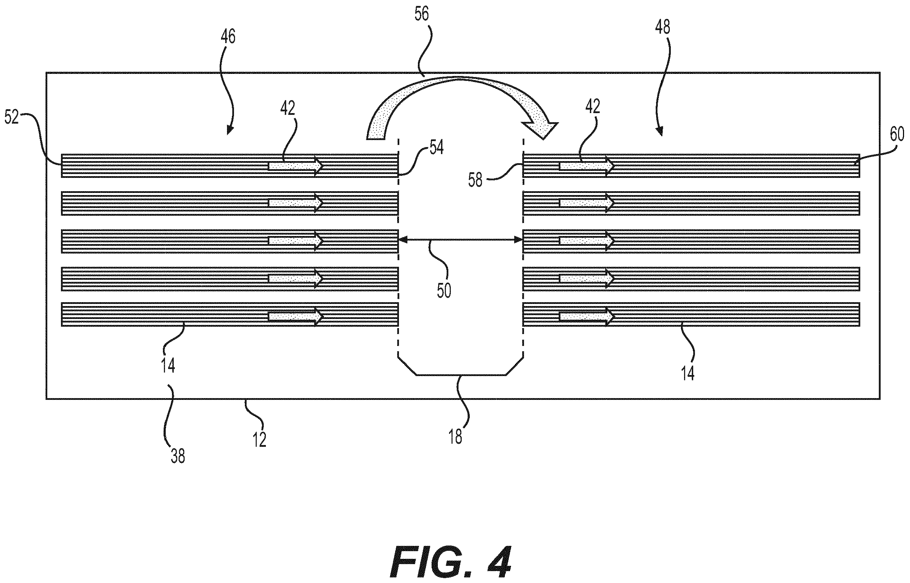

Fig. 4 illustrates the deposition of a first set of carbon fiber tows 46 and a second set of carbon fiber tows 48 separated from one another by a gap 50 that defines an opening, such as the opening 18 illustrated in Fig. 1. When depositing the carbon fiber tows 14, the first set of carbon fiber tows 46 should terminate at a position within a given tolerance range and the second set of carbon fiber tows 48 should commence at a position within a given tolerance range.

To deposit the two sets of carbon fiber tows 46, 48 separated by the gap 50, the head 22 presses the carbon fiber tows 14 against the mold starting at a first point 52. The head 22 travels to a second point 54, in the direction of the arrows 42, laying the first set of carbon fiber tows 46 onto the surface 38 of the mold 12. At the second point 54, the tows 14 are cut, establishing the first side of the gap 50. Then, the head 22 may be raised from the surface 38, as indicated by the arrow 56. The head 22 returns to the surface 38 at the third point 58, where the head 22 begins to lay the second set of carbon fiber tows 48 onto the surface 38. The head 22 continues until it reaches the fourth point 60, where the carbon fiber tows 14 are cut. The head 22 repeats this operation until all of the carbon fiber tows 14 are deposited onto the mold 12, in the order, at the angle, and to the thickness desired.

As should be apparent to those skilled in the art, the description of the operation of the head 22 is merely one, non-limiting example of many possible operations that may be performed by the fiber placement robot 20. For example, the gap 50 may define any shape including, but not limited to, a square, a rectangle, a triangle, a polygon, a circle, an oval, an ellipse, or an amorphous shape, as required or as desired. Moreover, the head 22 does not need to be lifted from the mold 12. Instead, the head 22 may cut and restart the application of the carbon fiber tows 14 while remaining pressed against the mold 12.

Also as should be apparent to those skilled in the art, depositing the two sets of carbon fiber tows 46, 48, such that they commence and terminate within a given tolerance range of a desired position, enables the weight of the component to be controlled without compromising component integrity. As noted, there are limitless possible orientations and patterns in which the carbon fiber tows 14 may be placed. Moreover, the carbon fiber tows 14 may be cut at any angle. Fig. 4 illustrates nothing more than a simple, non-limiting example to facilitate the discussion of the present invention.

For the head 22 to precisely deposit the carbon fiber tows 14 onto the surface 38, it is desirable to control the tension in each of the carbon fiber tows 14 as they pass through the head 22 and are deposited onto the mold 12. More specifically, it is desirable to control the magnitude of the tension in the carbon fiber tows 14 at the point where the head 22 presses the carbon fiber tows 14 against the surface 38 of the mold 12. This point is referred to as the tip 62 of the head.

Undesirably, uneven tension may develop in individual ones of the carbon fiber tows 14 during operation of the fiber placement robot 20. Uneven tension in the carbon fiber tows 14 is contemplated to impact the precision of the deposition onto the mold 12. Uneven tension can result in the carbon finer tows 14 being deposited at a position that is out-of-tolerance, or not deposited at all.

One possible source of uneven tension may be a driver motor (not shown) responsible for feeding the carbon fiber tows 14 to the head 22 and onto the mold 12. It is contemplated that the driver motor may slip over one of the carbon fiber tows 14 having a high tension, because the driver motor is unable to overcome the high tension keeping the carbon fiber tow 14 in place. Alternatively, the driver motor may feed the carbon fiber tow 14 to the head 22 with a retard in one pass and without a retard in another pass.

Regardless of the source of tension, when the tension in the carbon fiber tows 14 is uneven, the tension may negatively impact subsequent passes of the head 22 over the mold 12. Specifically, on each subsequent pass, each subsequent set of carbon fiber tows 14 may be deposited unevenly. The total effect of these misalignments may require that the composite component 16 be rejected from service. Alternatively, the composite component 16 may have to be reworked and/or repaired by hand. In either case, a composite component 16 that is not manufactured according to specific guidelines, including uniform tension in the carbon fiber tows 14, is likely to result in a costly manufacturing process.

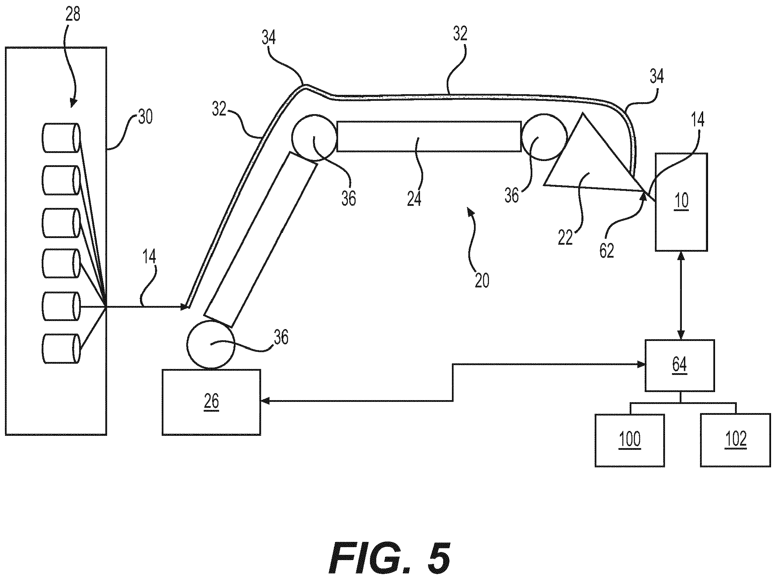

Figs. 5-7 illustrate a measurement device 10 according to an embodiment of the present disclosure.

As noted above, there are several factors that might contribute to different tensions in the sixteen carbon fiber tows 14 that are deposited on the mold 12 by the tip 62 of the head 22. Regardless of the source(s) of the tension, it becomes necessary periodically to adjust the tension in the carbon fiber tows 14 to assure desirable operation of the fiber placement robot 20 and, therefore, to assure the fabrication of a composite component 16 without defects (or with a minimum number of defects).

In the past, to measure the tension in the carbon fiber tows 14, a technician connected a hand-held instrument individually to each carbon fiber tow 14 to collect tension data. For several reasons, gathering and analyzing the tension data required a skilled expertise possessed by properly-trained personnel, which prevented the tasks from being completed quickly by an untrained operator and/or technician. Accordingly, the process of measuring, gathering, and analyzing the tension on sixteen separate carbon fiber tows 14, one at a time, proved to be time consuming. This delayed the fabrication of the composite components 16 and also added to the cost of fabrication.

While the tension in the carbon fiber tows 14 may be measured at any point along the length of the carbon fiber tows 14, the most useful measurements are taken at the tip 62 of the head 22, where the carbon fiber tows 14 are deposited onto the surface 38 of the mold 12. The further upstream from the head 22 the tension measurements are taken, the less suitable those measurements are for adjusting the operation of the fiber placement robot 20 and its associated equipment and components. It is desirable, therefore, to measure the tension in the carbon fiber tows 14 at or downstream of the tip 62 of the head 22.

Fig. 5 illustrates the measurement device 10 in a position adjacent to the tip 62 of the head 22. In this view, all sixteen of the carbon fiber tows 14 are connected to the measurement device 10.

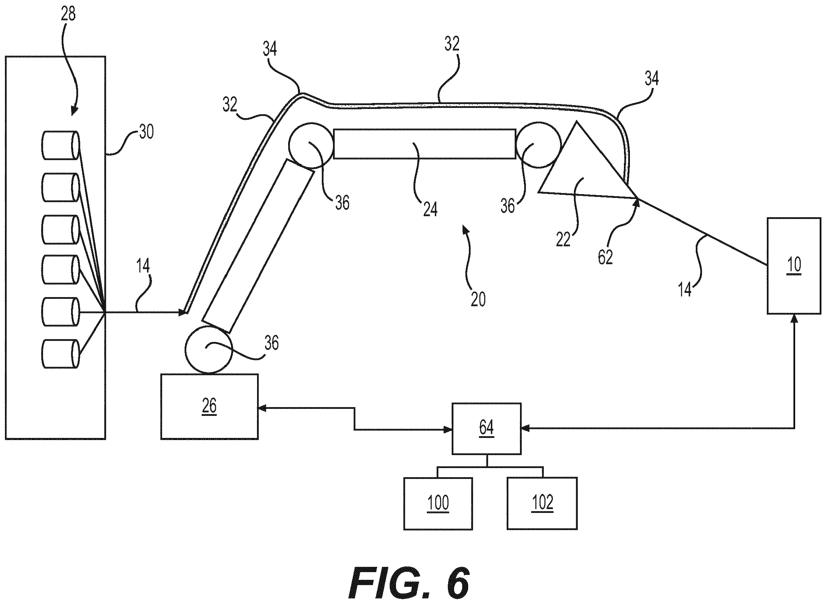

In operation, after the tows 14 are connected to the measurement device 10, the head 22 of the fiber placement robot 20 is moved to a predetermined location, as illustrated in Fig. 6. As should be apparent to those skilled in the art, the head 22 need not be the only part that is moved to the predetermined location. For example, the arm 24 may be employed to move the head 22 to the predetermined location. Alternatively, the fiber placement robot 20 may be moved, in whole or in part.

At the predetermined location, the tension in the individual tows 14 should be at a predetermined magnitude, arrived at by way of calculation, experimentation, and/or a combination of the two. For example, at the predetermined location, the tension may be zero. Alternatively, the predetermined magnitude may be a tension value that should not be exceeded for the tension to be acceptable. Once the actual, measured tension values are known for the carbon fiber tows 14, any deviation from the predetermined magnitude may be assessed. The tension on individual ones of the carbon fiber tows 14 may be adjusted so that the tension is consistent with the predetermined magnitude. It is noted that the tension need not be the same for each carbon fiber tow 14.

The tension in the carbon fiber tows 14 is the same at each discrete location along individual ones of the carbon fiber tows 14. Accordingly, the tension measured by the measurement device 10 is the tension that persists at the tip 62 of the head 22. As such, the measurement device 10 generates data that is very helpful when adjusting one or more components and/or variables associated with the apparatus.

As also illustrated in Figs. 5 and 6, the measurement device 10 may be connected to a controller 64. The controller 64 may be connected, in turn, to the fiber placement robot 20 and any other equipment associated therewith. For example, the controller 64 may be connected to the spools 28 via the spool housing 30. Based on an analysis of the measured tension readings, the controller 64 is contemplated to output a deviation signal indicative of whether one or more of the plurality of tension readings deviate from a predetermined tension value. In a further non-limiting embodiment, the controller 64 is contemplated to adjust or cause the adjustment of one or more parameters associated with the operation of the fiber placement robot 20, the spools 28, the spool housing 30, etc., at least partly on the basis of the deviation signal.

The illustration and discussion of the controller 64 should not be understood to be limited to a single controller 64. It is contemplated that more than one controller 64 may be employed. For example, the controller 64 may comprise a plurality of microcontrollers that are connected to load cells 74 in the measurement device 10, as discussed in greater detail below.

When the robot 20 is moved to the predetermined position illustrated in Fig. 6, the movement of the head 22 in relation to the measurement device 10, causes the generation of a plurality of measured tension readings, each of the plurality of measured tension readings being associated with a respective tension in each of the plurality of fiber tows 14. Among other operations, the controller 64 receives the plurality of measured tension readings and outputs one or more deviation signals indicative of whether one or more of the plurality of tension readings deviates from a predetermined tension value or range.

It is contemplated that movement of the robot 20 will result in the head 22 being moved with respect to the measurement device 10. It is equally possible that the measurement device 10 may be moved in relation to the head 22 to acquire the same measured tension values.

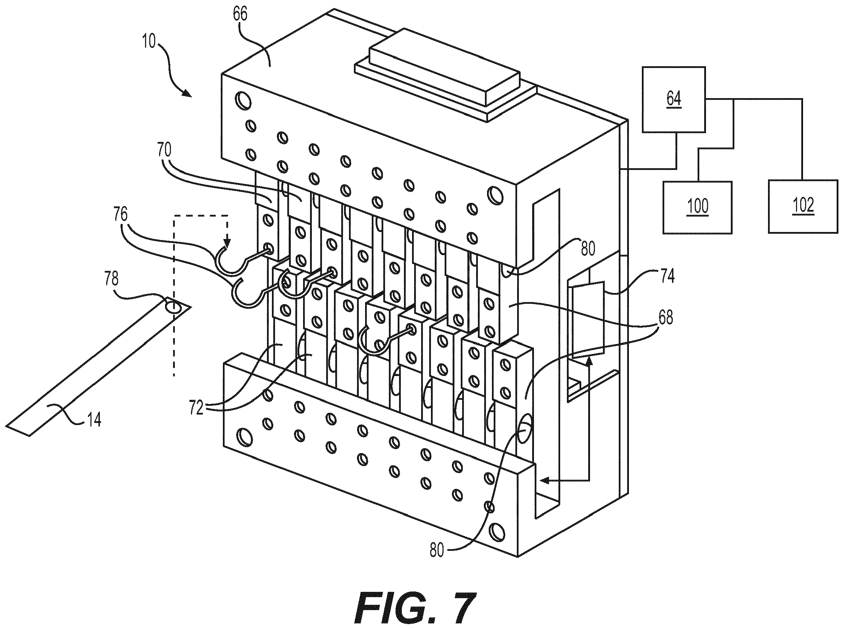

Fig. 7 provides a perspective illustration of one contemplated embodiment of the measurement device 10.

The measurement device 10 includes a housing 66 containing several load bars 68. While load bars 68 are employed in the illustrated example, load bars 68 should not be understood to limit the scope of the present invention. To the contrary, any suitable alternative may be employed.

In the illustrated embodiment, the load bars 68 are divided into an upper row of load bars 70 and a lower row of load bars 72. Since the measurement device 10 is contemplated to measure the tension in each of the sixteen carbon fiber tows 14 simultaneously, there are eight load bars 68 in the upper row of load bars 70 and eight load bars 68 in the lower row of load bars 72. The upper row of load bars 70 may be offset from the lower row of load bars 72 to provide additional room to attach the carbon fiber tows 14 thereto. It is understood that the measurement device 10 is not limited to 16 load bars 68 and that the measurement device 10 can have any number of load bars 68.

It is noted that each load bar 68 is contemplated to be connected to one load cell 74. The load bars 68 are contained within the housing 66. One such load cell 74 is illustrated in Fig. 7. The load cells 74 generate the measured tension values in a manner known to those skilled in the art. It is noted that reliance on the load bars 68 is merely exemplary of the illustrated embodiment. Other suitable components may be employed to connect the carbon fiber tows 14 to the load cells 74.

The load bars 68 are contemplated to be fitted with connectors 76. In the illustrated embodiment, the connectors 76 are fashioned as hooks, a few of which are shown by way of example. One carbon fiber tow 14 is contemplated to be attached to each connector 76. In the non-limiting example illustrated in Fig. 7, the carbon fiber tows 14 may be provided with openings 78 to engage the connectors 76. Alternatively, the carbon fiber tows 14 may be tied to the connectors 76. Still further, the carbon fiber tows 14 may be affixed to the connectors 76 using adhesive tape or any other suitable fastener.

In another contemplated embodiment, the connectors 76 may be pulleys or eyelets, for example, through which the carbon fiber tows 14 pass before being deposited onto the mold 12. In this configuration, it is contemplated that the measurement device 10 may take periodic measurements of the tension in the carbon fiber tows 14, for example.

After the carbon fiber tows 14 are connected to the connectors 76, the fiber placement robot 20 is moved such that the head 22 of the robot moves in relation to the measurement device 10 so that the tension in each of the carbon fiber tows 14 may be measured. The load bars 68 are provided with holes 80, which help the load bars 68 to flex. The strain on the load bars 68 may then be translated, by the load cells 74, into a measured tension in the carbon fiber tows 14.

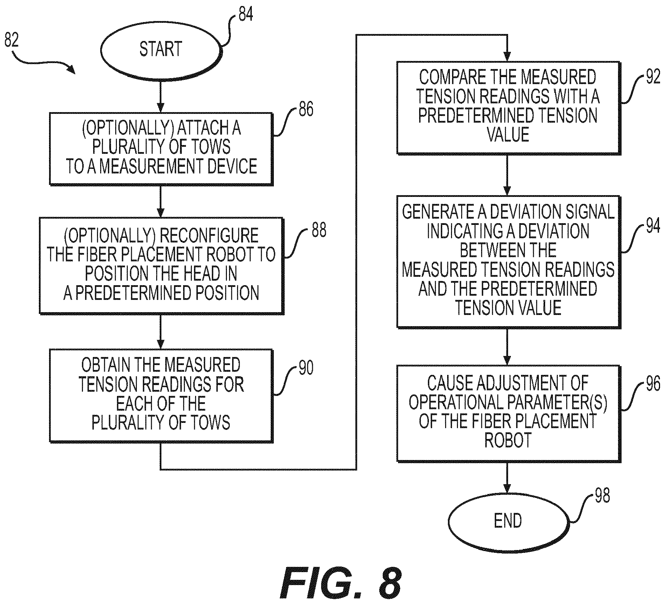

Fig. 8 is a flowchart that illustrates one non-limiting method 82 for measuring the tension in a plurality of carbon fiber tows 14.

The method 82 starts at step 84.

The method 82 proceeds to step 86 where the plurality of carbon fiber tows 14 are attached to the connectors 76 on the measurement device 10. This is illustrated, for example, in Fig. 5. The method 82 then proceeds to step 88.

It is noted that this step is optional. As described herein, the carbon fiber tows 14 may be connected to the connectors 76 on a permanent or semi-permanent basis.

At optional step 88, the fiber placement robot 20 is reconfigured to a predetermined position, such as shown in Fig. 6. At this predetermined position, a predetermined tension is anticipated to persist in each of the carbon fiber tows 14 for desirable operation of the apparatus. The method 82 then proceeds to step 90. Alternatively, step 88 may be omitted and the method 82 may commence at step 90.

At step 90, a plurality of measured tension readings are obtained by the measurement device 10. In the non-limiting example, the measured tension values are generated by the load cells 74. Each of the plurality of measured tension readings are associated with a respective tension in each of the plurality of carbon fiber tows 14. The method 82 then proceeds to step 92.

At step 92, for each carbon fiber tow 14, the measured tension value is compared to the predetermined tension value. This may be done by the measurement device 10, the controller 64, or another device, for example. The method 82 then proceeds to step 94.

At step 94, for each carbon fiber tow 14, a deviation between the measured tension value and the predetermined tension value is determined. The deviation leads to the outputting of a deviation signal indicative of a deviation between the measured tension readings and the predetermined tension value. This may be done by the measurement device 10, the controller 64, or another device, for example. The deviation signal is indicative of whether one or more of the plurality of measured tension readings deviates from the predetermined value. The method 82 then proceeds to step 96.

At optional step 96, the method 82 causes adjustment of operational parameters of the fiber placement robot 20. As described above, one or more parameters associated with the operation of the fiber placement robot 20, the spool housing 30, the conduit 32, and/or the head 22, may be caused to be adjusted in response to the generating of the deviation signal. Still other parameters may be adjusted and/or caused to be adjusted. For example, causing adjustment is contemplated to include displaying tension deviation readings, displaying a suggested parameter adjustment, automatically implementing some sort of adjustment, causing a shutdown of the fiber placement robot 20, etc. As should be apparent to those skilled in the art, there are numerous parameters that may be caused to be adjusted in response to the generation of a deviation signal. And, as also should be apparent to those skilled in the art, the measurement device 10, the controller 64, and/or another device may be responsible for causing the adjustment of the parameter or parameters. The method 82 then proceeds to step 98.

The method 82 ends at step 98.

As discussed above, the tension that is measured at step 90, otherwise referred to as the measured tension, may or may not comport with the predetermined tension. Any deviation between the measured tension and the predetermined tension may then be adjusted by altering one or more of the parameters associated with the apparatus.

As noted above, for the measurement device 10, the controller 64 may comprise a plurality of microcontrollers. If so, it is contemplated that each of the plurality of microcontrollers will be connected to and/or associated with one of the plurality of load cells 74. Still further, one microcontrollers may be connected with several load cells 74.

The load cells 74 and associated controller 64 output a signal indicative of whether one or more of the tension readings is out of tolerance. As noted, the term "deviation" is used to refer to a tension reading that is out of tolerance, deviates from or exceeds a predetermined value or range. The measured tension and/or the deviation may be displayed on a display 100. A display 100 may be a computer screen, for example. The display 100 should not be understood to be limited solely to a computer screen. It is contemplated that the display 100 may be as simple as a single light source that is illuminated when the deviation is greater than a predetermined value. As should be apparent to those skilled in the art, there are numerous ways in which the deviation may be displayed to a user.

Outputting a signal indicative of whether one or more of the plurality of tension readings is out of tolerance may encompass the display a visual indication of an out-of-tolerance condition. For example, a warning light may be employed to provide the visual indication.

As noted, the controller 64 is contemplated to determine if one or more of the plurality of measured tension readings is out of tolerance (and, therefore, a deviation) by comparing each of the plurality of measured tension readings to a predetermined acceptable tension value for each carbon fiber tow 14.

As should be apparent to those skilled in the art, the controller 64 may be connected to a non-transient machine-readable memory unit 102 for storing the plurality of measured tension readings and predetermined acceptable tension values for each of the carbon fiber tows 14. The machine-readable memory unit 102 also may be configured to record each deviation so that the signals indicative of whether one or more of the plurality of measured tension readings is out of tolerance may be analyzed, as required or desired.

As should be apparent to those skilled in the art, the method 82 illustrated in Fig. 8 is merely an example of any number of methods that may be employed within the scope of the present invention.

The measurement device 10 may be integrated into the fiber placement robot 20 so that the measurement device 10 may measure the tension in the carbon fiber tows 14 when prompted by an operator. Alternatively, the measurement device 10 may be configured to measure the tension in the carbon fiber tows 14 at periodic intervals (i.e., every fifteen minutes) during operation of the fiber placement robot 20, after the measurement device 10 is connected to the carbon fiber tows 14.

In one contemplated embodiment, the measurement device 10 may be integrated into the head 22 of the fiber placement robot 22. When configured in this manner, the measurement device 10 may take periodic measurements of the tension in the carbon fiber tows 14. Those measurements may be recorded as tension data in a memory connected to the controller 64 in one non-limiting example. When plural measurements are recorded over a period of time, the tension data may be analyzed for diagnostic and/or prognostic purposes, for example. The controller 64 may incorporate logic that correlates the tension data and any tension deviation with events during the motion of the fiber placement robot 20 that might be responsible for those tension deviations.

As noted above, tension deviations may result in adjustment of one or more operating parameters of the fiber placement robot 20 and associated equipment. For example, the tension deviation may indicate that a conduit 32 requires replacement. In another example, a feeding device may be the source of the deviation. A spool may be responsible for the deviation, etc. As should be apparent to those skilled in the art, there are a wide variety of operating parameters that may be adjusted as a result of the generation of the tension data. The examples listed here are not intended to limit the present invention.

The deviation signal is contemplated to encompass a wide variety of different signals and should not be understood to be limited solely to a signal representative of a particular tension measurement. For example, the deviation signal may be associated with a minimum and/or maximum value. If so, the deviation signal may be generated under conditions when the measured tension meets or exceeds the minimum or maximum values. In one contemplated example, the deviation signal may be an alarm that may be visual, auditory, audio-visual, or the like. Still further, the deviation signal may encompass a mean value and/or a peak value. As discussed above, the deviation signal also may be the amount a reading deviates from a predetermined tension value. As should be apparent to those skilled in the art, the deviation signal may encompass other suitable information and values.

Aspects and embodiments of the invention may be further understood with reference to the following, non-limiting numbered clauses:
1. A measurement device for simultaneously measuring the tension in a plurality of fiber tows mounted within a deposition head of a fiber placement robot, the measurement device comprising:
   a plurality of load cells;
   a plurality of connectors, each of the plurality of connectors being connected to a respective one of the plurality of load cells, each of the plurality of connectors being adapted to be connected to a respective one of the plurality of fiber tows, wherein movement of the fiber placement robot in relation to the measurement device generates a plurality of measured tension readings, each of the plurality of measured tension readings being associated with a respective tension in each of the plurality of fiber tows, and
   at least one controller for:
      receiving the plurality of measured tension readings from the plurality of load cells;
      comparing each of the plurality of measured tension readings to a predetermined tension; and outputting a deviation signal indicative of whether one or more of the plurality of tension readings deviates from the predetermined tension.
2. The measurement device of clause 1, wherein the at least one controller comprises:
   a plurality of microcontrollers,
   wherein each of the plurality of microcontrollers is associated with each of the plurality of load cells.
3. The measurement device of clause 1, further comprising:
   a display for displaying an output of the deviation signal if one or more of the plurality of tension readings deviates from the predetermined tension.
4. The measurement device of clause 3, wherein the display displays an indication of a deviance of a measured tension reading from the predetermined tension.
5. The measurement device of clause 1, wherein the deviation signal comprises a plurality of deviation signals, each being associated with one of the plurality of tension readings.
6. The measurement device of clause 4, wherein the indication of a deviance of a measured tension reading is a visual indication of an out-of-tolerance condition.
7. The measurement device of clause 1, further comprising:
   a machine-readable memory unit for storing the plurality of measured tension readings.
8. The measurement device of clause 7, wherein the machine-readable memory unit also stores the predetermined tension.
9. The measurement device of clause 8, wherein the machine-readable memory unit also stores the deviation signal.
10. The measurement device of clause 1, wherein the plurality of load cells simultaneously generates the plurality of measured tension readings.
11. The measurement device of clause 1, wherein the plurality of load cells comprises sixteen load cells.
12. The measurement device of clause 11, further comprising:
   a housing;
   sixteen connectors, each being connected to one of the sixteen load cells; and
   sixteen load bars disposed in the housing between the sixteen connectors and the sixteen load cells,
   wherein the sixteen load bars flex under tension and cooperate with the sixteen load cells to generate the plurality of measured tension readings.
13. The measurement device of clause 12, wherein the sixteen load bars are arranged in the housing in a first row of eight load bars and a second row of eight load bars.
14. A method for determining a measured tension in each of a plurality of fiber tows at a head of a robot adapted to deposit the plurality of fiber tows onto a mold, the measured tension being determined by a measurement device comprising a plurality of load cells and a plurality of connectors each connected respectively to one of the plurality of load cells, the method comprising:
   upon attachment of each of the plurality of fiber tows to a respective one of the plurality of load cells, obtaining a plurality of measured tension readings, each of the plurality of measured tension readings being associated with a respective tension in each of the plurality of fiber tows,
   comparing each of the plurality of measured tension readings to a predetermined tension value;
   generating at least one deviation signal indicative of whether one or more of the plurality of measured tension readings deviates from a predetermined tension value based on the comparing; and
   causing adjustment to at least one parameter associated with the operation of the fiber placement robot in response to the generating of the at least one deviation signal.
15. The method of clause 14, wherein at least one controller is connected to the measurement device, the method further comprising:
   comparing, by the controller, the measured tension with the predetermined tension in each of the plurality of fiber tows.
16. The method of clause 16, further comprising:
   determining, by the controller, a deviation between the measured tension and the predetermined tension for each of the plurality of fiber tows.
17. The method of clause 16, further comprising:
   adjusting an operational parameter of at least the head of the robot to compensate for the deviation.

As indicated above, the present invention may be implemented in any of a number of configurations without departing from the scope thereof. Any and all equivalents and variations that should be apparent to those skilled in the art are intended to be encompassed by the present invention.

## Claims

1. A measurement device (10) for simultaneously measuring the tension in a plurality of fiber tows (14) mounted within a deposition head (22) of a fiber placement robot (20), the measurement device (10) comprising:
a plurality of load cells (74);
a plurality of connectors (76), each of the plurality of connectors being connected to a respective one of the plurality of load cells (74), each of the plurality of connectors (76) being adapted to be connected to a respective one of the plurality of fiber tows (14), wherein movement of the fiber placement robot (20) in relation to the measurement device generates a plurality of measured tension readings, each of the plurality of measured tension readings being associated with a respective tension in each of the plurality of fiber tows (14), and
at least one controller (64) for:
receiving the plurality of measured tension readings from the plurality of load cells (74);
comparing each of the plurality of measured tension readings to a predetermined tension; and
outputting a deviation signal indicative of whether one or more of the plurality of tension readings deviates from the predetermined tension.

2. A measurement device (10) as claimed in claim 1, wherein the at least one controller (64) comprises a plurality of microcontrollers, wherein each of the plurality of microcontrollers is associated with each of the plurality of load cells (74).

3. A measurement device (10) as claimed in claim 1 or claim 2, comprising a display (100) for displaying an output of the deviation signal if one or more of the plurality of tension readings deviates from the predetermined tension.

4. A measurement device (10) as claimed in claim 3, wherein the display (100) is configured to display an indication of a deviance of a measured tension reading from the predetermined tension.

5. A measurement device (10) as claimed in any preceding claim, wherein the deviation signal comprises a plurality of deviation signals, each being associated with one of the plurality of tension readings.

6. A measurement device (10) as claimed in claim 4 or any claim dependent on claim 4, wherein the indication of a deviance of a measured tension reading is a visual indication of an out-of-tolerance condition.

7. A measurement device (10) as claimed in any preceding claim, comprising a machine-readable memory unit (102) for storing the plurality of measured tension readings, optionally wherein the machine-readable memory unit (102) also stores the predetermined tension and/or the deviation signal.

8. A measurement device (10) as claimed in any preceding claim, wherein the plurality of load cells (74) is configured to simultaneously generate the plurality of measured tension readings.

9. A measurement device (10) as claimed in any preceding claim, wherein the plurality of load cells (74) comprises sixteen load cells.

10. A measurement device (10) as claimed in claim 9, comprising:
a housing (66);
sixteen connectors (76), each being connected to one of the sixteen load cells (74); and
sixteen load bars (68) disposed in the housing between the sixteen connectors and the sixteen load cells (74);
wherein the sixteen load bars (68) are configured to flex under tension and cooperate with the sixteen load cells (74) to generate the plurality of measured tension readings.

11. A measurement device (10) as claimed in claim 10, wherein the sixteen load bars (68) are arranged in the housing (66) in a first row of eight load bars and a second row of eight load bars.

12. A method for determining a measured tension in each of a plurality of fiber tows (14) at a head of a robot (20) adapted to deposit the plurality of fiber tows onto a mold, the measured tension being determined by a measurement device (10) comprising a plurality of load cells (74) and a plurality of connectors (76) each connected respectively to one of the plurality of load cells (74), the method comprising:
upon attachment of each of the plurality of fiber tows (14) to a respective one of the plurality of load cells (74), obtaining a plurality of measured tension readings, each of the plurality of measured tension readings being associated with a respective tension in each of the plurality of fiber tows (14);
comparing each of the plurality of measured tension readings to a predetermined tension value;
generating at least one deviation signal indicative of whether one or more of the plurality of measured tension readings deviates from a predetermined tension value based on the comparing; and
causing adjustment to at least one parameter associated with the operation of the fiber placement robot (20) in response to the generating of the at least one deviation signal.

13. A method as claimed in claim 12, wherein at least one controller (64) is connected to the measurement device (10), the method comprising comparing, by the controller (64), the measured tension with the predetermined tension in each of the plurality of fiber tows (14).

14. A method as claimed in claim 13, comprising determining, by the controller (64), a deviation between the measured tension and the predetermined tension for each of the plurality of fiber tows (14).

15. A method as claimed in claim 14, comprising adjusting an operational parameter of at least the head of the robot (20) to compensate for the deviation.
